# EUROPEAN PATENT SPECIFICATION

(11) **EP 2 013 676 B1**
(45) Date of publication and mention of the grant of the patent: **26.01.2011**
(21) Application number: 07724298.0
(22) Date of filing: 17.04.2007
(51) Int. Cl.: G05D 23/02, F16K 31/00

(54) **THERMOSTATIC DEVICE FOR WATER AND ENERGY SAVING**
THERMOSTATISCHE ANORDNUNG FÜR WASSER- UND ENERGIEERSPARNIS
MÉCANISME THERMOSTATIQUE POUR ÉCONOMISER DE L'EAU ET DE L'ENERGIE

(30) Priority: 19.04.2006 IT MI20060775
(43) Date of publication of application: 14.01.2009
(73) Proprietor: Sar Societa' Semplice, 13018 Valduggia (IT)
(72) Inventor: GRANDIS, Francesco, 13011 Borgosesia (IT)
(74) Representative: Petruzziello, Aldo
(86) International application number: PCT/EP2007/003360
(87) International publication number: WO 2007/118702

(56) References cited:
- US-A- 4 210 284
- US-A- 5 123 593
- US-A- 5 967 409
- US-A- 5 988 514

## Description

The present invention concerns a thermostatic device for water and energy saving.

As is known, hot water in domestic systems is supplied via a heat exchanger connected to a heating source. Generally, when the user opens a hot water tap, the water circulating in the hot water supply system takes some time to reach the required temperature at the tap outlet.

Consequently, the user often leaves the hot water tap open while doing other jobs and then goes back to check whether the water coming out has reached the required temperature, with the risk of inadvertently leaving the hot water tap open for long periods. This involves a considerable waste of energy and water; in fact a large amount of hot water is wasted without being used.

U.S. 5.988.514 discloses an apparatus for controlling fluid temperature, capable of controlling hot and cold fluid flow so that the mixed fluid discharge therefrom can be kept at an appropriate temperature.

U.S. 5.123.593 discloses a faucet aerator containing a manually overrideable heat sensitive valve, which when affixed to a water faucet can stop the flow of water when harmful temperatures are reached.

The aim of the present invention is to eliminate the drawbacks of the prior art, providing a thermostatic device for water and energy saving which is efficient, effective and reliable.

A further object of the present invention is to provide a thermostatic device that is versatile, suitable for being applied in various types of hot water supply and which at the same time can be industrially produced.

These objects are achieved in accordance with the invention with the characteristics listed in the attached independent claim 1.

Advantageous embodiments of the invention appear from the dependent claims.

The thermostatic device according to the invention comprises:
- a container body designed to be connected to a hot water delivery outlet;
- a sleeve coupled to said body and suitable for being connected to a hot water supply pipe;
- a slide running inside said body and provided with a channel for passage of the water;
- release means for locking said slide in position, which can be operated by the user to release the slide;
- a shutter running inside said slide, switching from a closed position, in which it closes the flow from the sleeve towards the channel of said slide, to an open position permitting the flow from the sleeve towards the channel of said slide;
- temperature-sensitive means suitable for detecting the temperature of the water inside said sleeve, and
- actuator means coupled to said shutter and operatively connected to said temperature-sensitive means to set said shutter to its closing position, when said temperature-sensitive means have detected a temperature higher than a pre-set threshold.

In this way when the temperature of the water reaches a pre-set threshold value, the temperature-sensitive means operate the actuator means which push the shutter, moving it to the closing position in which it interrupts the flow of hot water, resulting in a considerable saving of both energy and water.

When the user requires hot water, he operates the release means. This causes the slide to move due to the pressure of the water and the shutter no longer interrupts the flow. The hot water can therefore flow through the thermostatic device.

When the user closes the water tap, the device is re-set, i.e. the slide returns to the starting position, the release means lock the slide and the actuator means return to the starting position together with the shutter. The thermostatic device is now ready for a new cycle.

Further characteristics of the invention will become clearer from the following detailed description referring to an embodiment provided purely by way of example and therefore non-limiting, illustrated in the attached drawings, in which:
Fig. 1 is a perspective exploded view of a thermostatic device according to the invention;
Fig. 2 is a lateral view of the device of Fig. 1 assembled;
Fig. 3 is a rear view taken in the direction of the arrow A of Fig. 2;
Fig. 4 is an enlarged axial section view taken along the sectional plane IV-IV of Fig. 3;
Fig. 5 is an axial section view of the body of the thermostatic device of Fig. 1;
Fig. 6 is a frontal view of the closing sleeve of the thermostatic device;
Fig. 7 is an axial section view taken along the sectional plane VII-VII of Fig. 6;
Fig. 8 is a lateral view, partially in axial section, of the sleeve of Fig. 7;
Fig. 9 is a lateral view of the temperature-sensitive actuator element of the thermostatic device of Fig. 1;
Fig. 10 is a perspective view of the filter of the thermostatic device of Fig. 1;
Fig. 11 is an axial section view of the slide of the thermostatic device of Fig. 1;
Fig. 12 is a cross section view taken along the sectional plane XII-XII of Fig. 11;
Fig. 13 is a lateral view of the shutter piston of the thermostatic device of Fig. 1;
Fig. 14 is an axial section view, taken along the sectional plane XIV-XIV of Fig. 13;
Fig. 15 is a lateral view of the release shaft of the thermostatic device of Fig. 1; and
Fig. 16 is an axial section view taken along the sectional plane XVI-XVI of Fig. 15.

The thermostatic device according to the invention, indicated as a whole by reference number 1, is described with the help of the Figures.

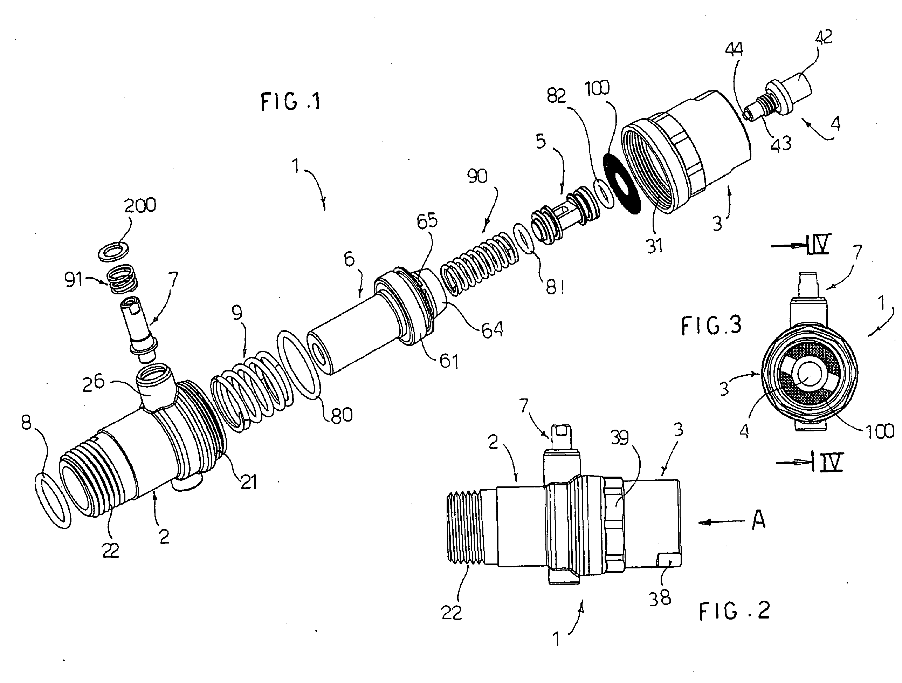

For now with reference to Fig. 1 - 4, the thermostatic device 1 comprises a container body 2 and a closing sleeve or connection 3 which couples with the container body 2. Inside the connection 3 a temperature-sensitive actuator element 4 is fitted suitable for operating a shutter 5 running inside a slide 6. The slide 6 runs inside the body 2 and is locked in position by a release shaft 7. The release shaft 7 is connected to a lever (not shown) designed to be operated manually by the user to release the slide 6.

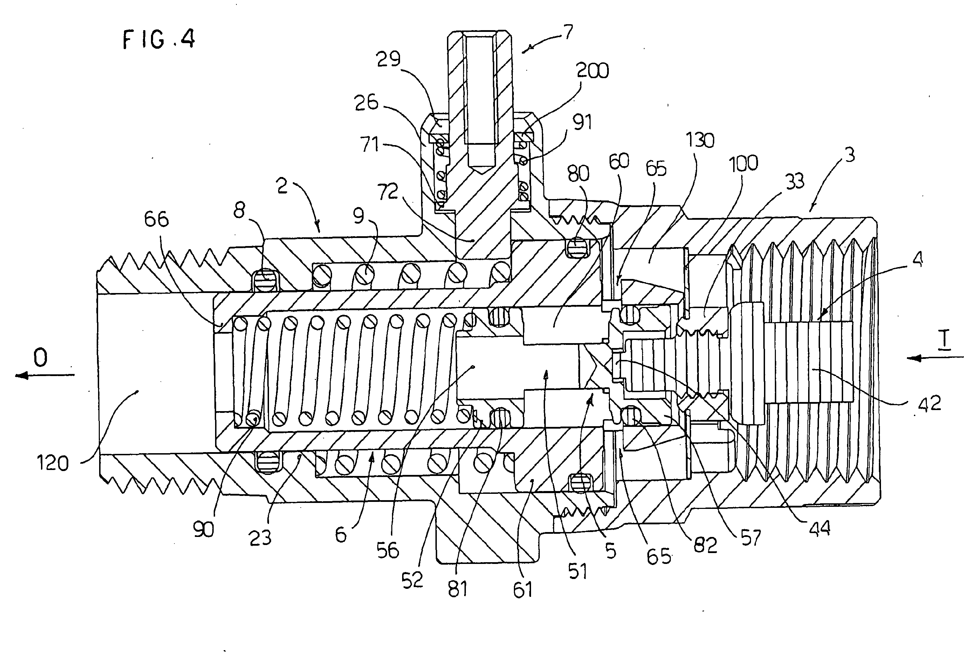

With reference to Fig. 4, it should be noted that the flow of water enters the connection 3 in the direction of the arrow I and leaves the body 2 in the direction of the arrow O. Below, the terms front and rear will refer to the outlet direction O and the inlet direction I respectively.

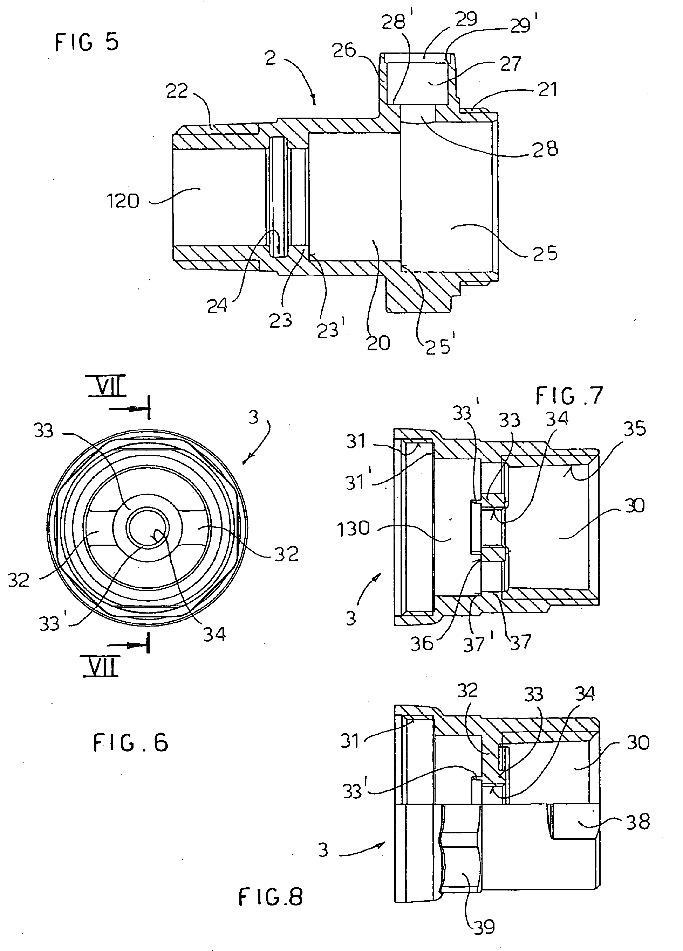

With reference to Fig. 5, the body 2 has a substantially cylindrical shape with an axial channel comprising a central channel 20, a front channel 120 with smaller diameter and a rear channel 25 with larger diameter.

The body 2 has at its ends a rear external thread 21 for sleeve with the connection 3 and a front external thread 22 for sleeve with a tap element (not shown), such as a shower, bath, sink or basin inlet.

Between the central channel 20 and the front channel 120 a narrowing or collar 23 is provided which protrudes radially towards the inside defining a radial shoulder 23' and a circular groove 24 designed to house an O-ring 8 (Fig. 4).

A radial shoulder 25' is defined between the central channel 20 and the rear channel 25.

A cylindrical fitting 26 provided with a radial channel 27 suitable for housing the release shaft 7 protrudes radially from the body 2 towards the outside. The radial channel 27 continues with a channel of smaller diameter 28 which communicates with the rear axial channel 25 and defines a shoulder 28' inside the radial fitting 26. The end of the radial fitting 26 has an enlarged seat 29 inside, defining a radial shoulder 29'.

With reference to Figs. 6, 7 and 8, the sleeve 3 has a substantially cylindrical form with an axial channel comprising a rear channel 30 and a front channel 130 with larger diameter. The sleeve 3 is provided, at one end, with a front internal thread 31 terminating in a shoulder 31'. The front internal thread 31 is suitable for sleeve with the rear external thread 21 of the body 2. The other end of the sleeve 3 is provided with a rear internal thread 35 suitable for sleeve with a threaded connection of a hot water supply pipe.

In a central position, between the rear channel 30 and the front channel 130 is a collar 37 which protrudes towards the inside defining an annular shoulder 37'. From the collar 37 two bridges 32 protrude inwards in diametrically opposed positions. The bridges 32 support a circular ring nut 33 provided with an internal thread 34.

A coaxial cylindrical rim 33' protrudes from the front of the ring nut 33; said rim 33' defines around it an annular shoulder 36 positioned at the same level as the shoulder 37'.

Circumferential protrusions 39 are provided on the outer surface of the sleeve 3 to facilitate screw-tightening and two notches 38 are arranged in diametrically opposed positions to facilitate screw-tightening of the sleeve 3 on the hot water supply pipe.

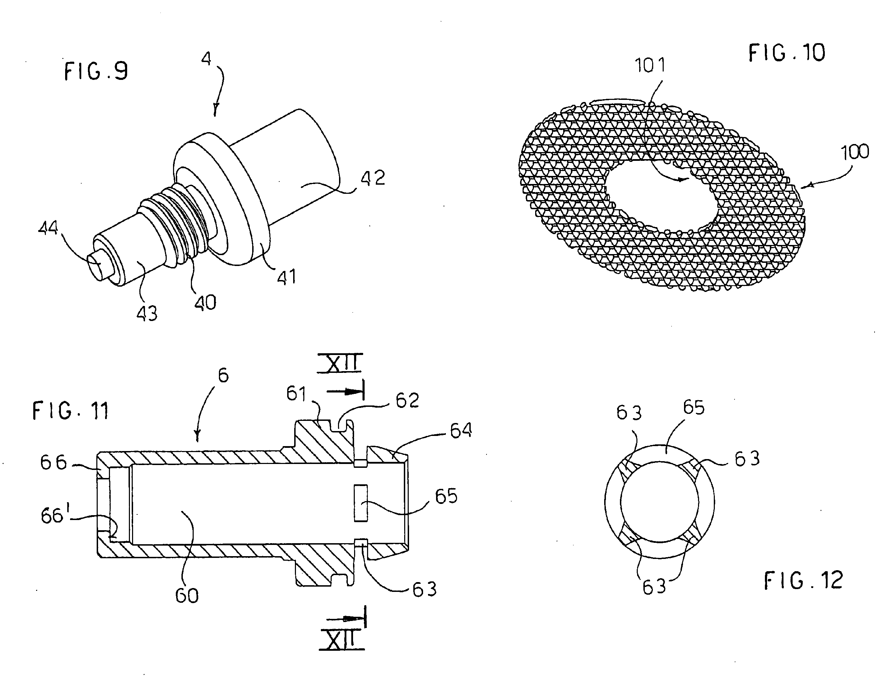

As shown in Fig. 9, the temperature-sensitive actuator element 4 comprises, in its central part, an external thread 40 suitable for engaging with the internal thread 34 of the ring nut 33. A stop flange 41 of the temperature-sensitive element 4 abuts against the rear surface of the ring nut 33.

Behind the stop flange 41 is a rear cylindrical body 42 which contains a temperature-sensitive material, connected to a piston 44 of a linear actuator 43 positioned in front of the central thread 40.

The temperature-sensitive material can be, for example, a thermo-expanding material such as a mixture of paraffin wax which expands or grows when it reaches a certain temperature, thus activating the piston 44 of the actuator 43 which moves forward axially. Obviously instead of the paraffin any temperature-sensitive element can be used, such as a thermocouple, a thermistor, a thermometer or similar. When the temperature-sensitive element detects that the set temperature has been reached, it sends a command signal to appropriate activation means which activate the piston 44 of the actuator 43.

With reference to Fig. 10, the thermostatic device 1 also comprises a filter 100 to prevent impurities and limescale getting into the body 2, which could damage and cause deterioration of the internal parts of the device 1. The filter 100 is, for example, a stainless steel grille filter and has a substantially disc-like shape with central hole 101.

With reference also to Figs. 4 and 7, the filter 100 is positioned on the annular shoulder 36, 33' of the sleeve 3, so that the rim 33' of the ring nut 32 of the sleeve enters the hole 101 of the filter 100; locking of the filter in said position is obtained, for example, by swaging of the rim 33'.

With reference to Fig. 11 and 12, the slide 6 comprises a substantially cylindrical body with an axial channel 60. In the rear part of the slide there is a cylindrical flange 61 of larger diameter which protrudes radially towards the outside of the slide body. On the outer surface of the flange 61 there is an annular groove 62 designed to house an O-ring 80 (Fig. 4).

With reference to Fig. 5, the outer diameter of the body of the slide 6 is slightly smaller than the diameter defined by the collar 23 and the front channel 120 of the body 2.

The outer diameter of the flange 61 is slightly smaller than the diameter of the rear channel 25 of the body 2. In this way, as shown in Fig. 4, the slide 6 can run axially and is sealed by means of the gaskets 8 and 80 inside the body 2.

A spring 9 is positioned in the channel 20 of the body 2 around the slide 6. One end of the spring 9 abuts against the shoulder 23' of the collar 23 and the other end of the spring 9 abuts against the radial shoulder of the flange 61 of the slide. In this way the slide 6 is pushed back by the action of the spring 9.

Returning to Figs. 11 and 12, at the rear end of the flange 61 four bridges 63 are provided positioned equidistant from one another and in diametrically opposed positions. The bridges 63 support a truncated cone-shaped head 64. In this way four slots 65 are created between the bridges 63 for passage of the water.

At the front end of the slide 6 there is a collar 66 facing inwards which creates a shoulder 66'.

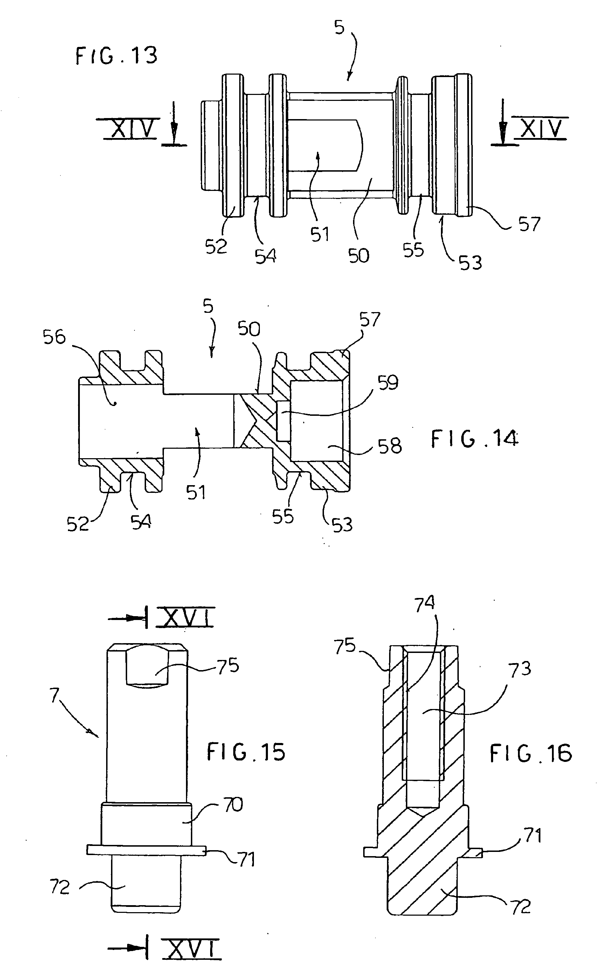

With reference to Figs. 13 and 14 the shutter piston 5 comprises a central stem 50 which supports a front plunger 52 and a rear plunger 53. The stem 50 consists of a substantially U-shaped bracket so as to create a slot 51 communicating with an axial channel 56 obtained inside the front plunger. In this way the water can pass from the slot 51 and flow forward through the channel 56.

The front and rear plungers 52 and 53 have an external diameter slightly smaller than the diameter of the channel 60 of the slide and are provided with respective annular grooves 54 and 55 suitable for housing respective O rings 81 and 82 (Fig. 4). In this way the shutter piston 5 can run and is sealed inside the slide 6.

When the shutter 5 is pushed forward by the actuator 44, the O ring 82 moves in turn forward along the channel 60 of the slide, creating a seal on said channel, and arrives at the position in which it obstructs the flow of water coming from the slots 65 of the slide, in this way interrupting the flow of hot water through the device 1.

The rear plunger 53 is provided at the back with a flange or diameter 57 which, together with a flange or diameter of the front plunger 52, serve to guide the shutter 5, avoiding excessive misalignment with respect to the channel 60 which could lead to mechanical jamming of the shutter.

A spring 90 is positioned inside the channel 60 of the slide 6. One end of the spring 9 abuts against the shoulder 66' of the front collar 66 of the slide and the other end of the spring 90 abuts against the front end of the front plunger 52 of the shutter 5. Via the thrust of the spring 90, the shutter 5 is pushed backwards and the slide 6 is pushed forward, i.e. it keeps open the slots 65 for passage of the water.

The rear plunger 53 has a circular seat 58 open at the rear and terminating in a blind hole 59. In this way, the actuator 43 of the temperature-sensitive element 4 engages, with a certain clearance, in the circular seat 58 of the rear plunger and the end of the piston 44 of the actuator 43 engages, with a certain clearance, in the blind hole 59 of the shutter 5.

This arrangement, in which the piston 44 of the actuator is separated from the shutter 5, permits perfect centring of the piston 44 and at the same time perfect guiding of the shutter 5.

With reference to Figs. 15 and 16, the release shaft 7 comprises a substantially cylindrical body provided with a part of larger diameter 70 from which a stop flange 71 protrudes radially towards the outside, delimiting a lower portion 72 of the shaft. The shaft is provided with a hole 73 with internal thread 74 open at the top to house an operating lever that can be activated manually by the user.

As shown in Fig. 4, the release shaft 7 is positioned inside the channel 27 of the radial fitting 26 of the body 2, until the flange 71 of the shaft stops against the shoulder 28'. In this way, the lower part 72 of the shaft passes through the channel 28 and is positioned in the channel 25 so as to stop against the flange 61 of the slide 6, locking the slide 6 in position.

A spring 91 is positioned in the radial channel 27 of the fitting 26 around the part with larger diameter 70 of the shaft 7. One end of the spring 91 abuts against the flange 71 of the shaft 7 and the other end of the spring 91 is pressed by a washer 200 which abuts against the surface 29' of the end seat 29. At this point the top end edge of the fitting 26 is riveted towards the inside so as to lock the washer 200 in position.

This solution, in which the washer 200 is locked by riveting of the upper edge of the fitting 26, permits easy mechanised assembly of the spring 91, which would otherwise be extremely complex.

As a result the spring 91 pushes the release shaft 7 downwards. It should be remembered that the release shaft 7 is connected to an operating lever via a cam system which permits lifting of the release shaft against the action of the spring 91, to release the slide 6.

Operation of the thermostatic device 1 is described below, with particular reference to Fig. 4.

When the hot water tap is opened, the water enters the sleeve 3, in the direction of the arrow I, coming into contact with the rear part 42 of the temperature-sensitive element 4.

The water then passes through the filter 100 and flows through the slots 65 into the channel 60 of the slide 6. The water then passes through the slot 51 of the piston stem and through the channel 56 of the front plunger 52, flowing into the front part of the channel 60 of the slide. Lastly, the water leaves the channel 60 of the slide, passes through the front channel 120 of the body 2 and flows out of the thermostatic device 1 in the direction of the arrows O from which it is delivered by a tap element.

When the temperature of the water reaches a pre-set value, for example a value between 30 - 40°C, the paraffin contained in the rear part 42 of the temperature-sensitive element expands, pushing forward the piston 44 of the actuator 43. As a result, the piston 44 pushes forward the shutter 5 against the action of the spring 90 which is compressed.

Consequently the O-ring 82 is positioned beyond the slots 65 of the slide 6, preventing the water from flowing into the channel 60 of the slide and out of the device 1. As a result, no hot water is wasted. In fact, the hot water stops in the channel 130 of the sleeve 3. In this condition, the pressure of the water does not move the slide 6, because it is locked by the release shaft 7.

When the user wishes to use the hot water, he operates the lever of the thermostatic device 1, raising the release shaft 7. Thus the lower part 72 of the release shaft no longer interferes with the flange 61 of the slide. As a result, the slide 6 is pushed forward, against the action of the spring 9, due both to the pressure of the water and the thrust of the spring 90 (which simultaneously pushes the shutter 5 back).

Consequently the slide 6 and therefore its slots 65 move, positioning themselves in front of the O-ring 82, restoring the flow of water through the device 1.

When the user closes the hot water tap, there is no water pressure against the flange 61 of the slide. As a result, the slide 6 is pushed back by the action of the spring 9. The release lever 7 is pushed down due to the action of the spring 91 and the lower part 72 of the release lever re-locks the flange 61 of the slide.

When the paraffin cools in the rear part 42 of the heat-sensitive element and drops below the pre-set temperature, the piston 44 retracts inside the actuator 43 and the shutter 5 is pushed back by the action of the spring 90 so as to re-set the thermostatic device 1 which is ready for a new operating cycle.

The elements designed to come into contact with the water, such as the sleeve 3, the body 2, the slide 6 and the shutter 5 or their portions are treated by means of a coating process with chromium and/or Teflon and/or nickel or similar, to reduce the friction and/or increase resistance to wear and/or reduce the deposit of limescale and similar.

## Claims

1. Thermostatic device (1) comprising:
- a container body (2) designed to be connected to a hot water delivery inlet,
- a sleeve (3) coupled to said body (2) and suitable for being connected to a hot water supply pipe,
- a slide (6) running inside said body (2) and provided with a channel (60) for passage of the water,
- means (7) acting on said slide (6) which can be operated by the user,
- a shutter (5) running inside said slide (6) to switch from a closing position in which it closes the flow from the sleeve (3) towards the channel (60) of said slide, to an opening position in which it permits the flow from the sleeve (3) towards the channel (60) of said slide,
- temperature-sensitive means (42) suitable for detecting the temperature of the water and
- actuator means (43, 44) coupled to said shutter (5) and operatively connected to said temperature-sensitive means (42) to set said shutter to its closed position, when said temperature-sensitive means (42) have detected a temperature higher than a pre-set threshold value,
**characterised in that**
- said means (7) are release means suitable for locking and releasing the slide (6),
- said temperature-sensitive means (42) are suitable for detecting the temperature of the water inside the sleeve (3),
- said slide (6) comprises a flange of larger diameter (61) suitable for being locked by said release means (7) which comprise a shaft sliding in a radial duct (26) of said body (2).

2. Device (1) as claimed in claim 1, **characterised in that** said temperature-sensitive means (42) comprise thermo-expanding materials, such as mixtures of paraffin waxes.

3. Device (1) as claimed in claim 1 or 2, **characterised in that** said actuator means comprise a piston (44) which operates in a seat (59) of said shutter (5).

4. Device (1) as claimed in claim 3, **characterised in that** said sleeve (3) comprises radial bridges (32) which support a ring nut threaded internally (33) to accommodate an external thread (40) of said actuator means (43), so that the piston (44) of the actuator means operates axially with respect to the device (1).

5. Device (1) as claimed in any one of the preceding claims, **characterised in that** said shutter (5) comprises a stem (50) which supports at its ends a front plunger (52) and a rear plunger (53) provided with gaskets (81, 82) to guide the front plunger (52) and to interrupt the flow of water inside the channel (60) of the slide respectively.

6. Device (1) as claimed in claim 5, **characterised in that** said stem (50) of the shutter has a slot (51) communicating with an axial channel (56) inside said front plunger (52) which communicates with the channel (60) of the slide.

7. Device (1) as claimed in anyone of the preceding claims, **characterised in that** at the end of said flange (61) of the slide, bridges (63) are provided which support a head (64) so as to define slots (65) for passage of the water from said connection to said channel (60) of the slide.

8. Device (1) as claimed in claim 7, **characterised in that** at the rear end of the rear plunger (52) of the shutter, a flange (57) is provided which, together with a guiding rim positioned at the front end of the front plunger (52), helps to guide the shutter (5) in its movement inside the channel (60) of the slide (6), preventing jamming due to misalignment between the axis of the shutter (5) and the axis of the channel (60) of the slide (6).

9. Device (1) as claimed in any one of the preceding claims, **characterised in that** said body (2) comprises an axial channel comprising a central channel (20), a front channel with smaller diameter (120) and a rear channel with larger diameter (25), in which between the central channel (20) and the front channel (120) a collar (23) is provided and a gasket (8) to guide and seal the front part of the slide (6), a second gasket (80) being positioned around the flange (61) of the slide to guide and seal running of the flange (61) of the slide inside the rear channel (25) of the body (2).

10. Device (1) as claimed in anyone of the preceding claims, **characterised in that** it comprises a spring (9) of the slide positioned around the slide (6) in the central channel (20) of the body, in which one end of the spring stops against said collar (23) of the body and the other end of the spring stops against said flange (61) of the slide.

11. Device (1) as claimed in any one of the claims from 5 to 10, **characterised in that** it comprises a spring (90) of the shutter positioned inside said slide (6) and having one end abutting on a front collar (66) of the slide and the other end abutting on the front plunger (52) of the shutter.

12. Device (1) as claimed in any one of the preceding claims, **characterised in that** it comprises a spring (91) of the release shaft positioned inside said radial connection (26) of the body around the release shaft (7), in which one end of the spring abuts on a flange (71) of the release shaft and the other end of the spring abuts on a washer (200) locked in said radial connection (26) by means of riveting of the connection end edge.

13. Device (1) as claimed in any one of the preceding claims, **characterised in that** it comprises a filter (100) positioned in said sleeve (3) around said actuator means (43) to filter the limescale and impurities.

14. Device (1) as claimed in any one of the preceding claims, **characterised in that** the elements designed to come into contact with the water are treated totally or partly by means of a process of coating with chromium and/or Teflon and/or nickel and/or other surface treatments suitable for increasing resistance to wear and/or reducing friction between the parts in relative movement and/or slowing down/reducing the process of deposit of limescale.

## Patentansprüche

1. Thermostatvorrichtung (1), die Folgendes umfasst:
- einen Behälterkorpus (2), der dafür vorgesehen ist, an einen Warmwasserzulauf angeschlossen zu werden,
- eine Muffe (3), die mit dem Korpus (2) gekoppelt ist und dafür geeignet ist, an eine Warmwasserzuleitung angeschlossen zu werden,
- ein Gleitstück (6), das innerhalb des Korpus' (2) verläuft und mit einem Kanal (60) zum Durchlassen des Wassers versehen ist,
- ein Mittel (7), das auf das Gleitstück (6) wirkt und durch den Nutzer betätigt werden kann,
- ein Verschlussstück (5), das im Inneren des Gleitstücks (6) verläuft, um von einer Schließposition, in der es den Fluss von der Muffe (3) in Richtung des Kanals (60) des Gleitstücks sperrt, in eine Öffnungsposition, in der es den Fluss von der Muffe (3) in Richtung des Kanals (60) des Gleitstücks frei gibt, umzuschalten,
- ein Temperaturfühlmittel (42), das zum Detektieren der Temperatur des Wassers geeignet ist, und
- ein Betätigungsmittel (43, 44), das mit dem Verschlussstück (5) gekoppelt ist und mit dem Temperaturfühlmittel (42) wirkverbunden ist, um das Verschlussstück in seine Schließposition zu versetzen, wenn das Temperaturfühlmittel (42) eine Temperatur detektiert, die höher als ein voreingestellter Schwellenwert ist,
**dadurch gekennzeichnet, dass**
- das Mittel (7) ein Freigabemittel ist, das dafür geeignet ist, das Gleitstück (6) zu arretieren und freizugeben,
- das Temperaturfühlmittel (42) dafür geeignet ist, die Temperatur des Wassers im Inneren der Muffe (3) zu detektieren,
- das Gleitstück (6) einen Flansch von größerem Durchmesser (61) umfasst, der dafür geeignet ist, durch das Freigabemittel (7) arretiert zu werden, das einen Schaft umfasst, der in einem radialen Schacht (26) des Korpus' (2) gleitet.

2. Vorrichtung (1) nach Anspruch 1, **dadurch gekennzeichnet, dass** das Temperaturfühlmittel (42) wärmeausdehnende Materialien umfasst, wie zum Beispiel Paraffinwachsgemische.

3. Vorrichtung (1) nach Anspruch 1 oder 2, **dadurch gekennzeichnet, dass** das Betätigungsmittel einen Kolben (44) umfasst, der in einem Sitz (59) des Verschlussstücks (5) arbeitet.

4. Vorrichtung (1) nach Anspruch 3, **dadurch gekennzeichnet, dass** die Muffe (3) radiale Brücken (32) umfasst, die eine Ringmutter (33) tragen, die ein Innengewinde aufweist, um ein Außengewinde (40) des Betätigungsmittels (43) aufzunehmen, so dass der Kolben (44) des Betätigungsmittels axial relativ zu der Vorrichtung (1) arbeitet.

5. Vorrichtung (1) nach einem der vorangehenden Ansprüche, **dadurch gekennzeichnet, dass** das Verschlussstück (5) einen Schaft (50) umfasst, der an seinen Enden einen vorderen Stempel (52) und einen hinteren Stempel (53) trägt, die mit Dichtungen (81, 82) versehen sind, um den vorderen Stempel (52) zu führen bzw. den Fluss des Wassers im Inneren des Kanals (60) des Gleitstücks zu unterbrechen.

6. Vorrichtung (1) nach Anspruch 5, **dadurch gekennzeichnet, dass** der Schaft (50) des Verschlussstücks einen Schlitz (51) aufweist, der mit einem axialen Kanal (56) im Inneren des vorderen Stempels (52) in Strömungsverbindung steht, der mit dem Kanal (60) des Gleitstücks in Strömungsverbindung steht.

7. Vorrichtung (1) nach einem der vorangehenden Ansprüche, **dadurch gekennzeichnet, dass** am Ende des Flansches (61) des Gleitstücks Brücken (63) angeordnet sind, die einen Kopf (64) so stützen, dass Schlitze (65) gebildet werden, um das Wasser von der Verbindung zu dem Kanal (60) des Gleitstücks zu leiten.

8. Vorrichtung (1) nach Anspruch 7, **dadurch gekennzeichnet, dass** am hinteren Ende des hinteren Stempels (52) des Verschlussstücks ein Flansch (57) angeordnet ist, der zusammen mit einem Führungsrand, der am vorderen Ende des vorderen Stempels (52) angeordnet ist, hilft, das Verschlussstück (5) in seiner Bewegung im Inneren des Kanals (60) des Gleitstücks (6) zu führen, um so ein Verklemmen infolge einer Fehlausrichtung zwischen der Achse des Verschlussstücks (5) und der Achse des Kanals (60) des Gleitstücks (6) zu verhindern.

9. Vorrichtung (1) nach einem der vorangehenden Ansprüche, **dadurch gekennzeichnet, dass** der Korpus (2) einen axialen Kanal umfasst, der einen mittigen Kanal (20), einen vorderen Kanal mit kleinerem Durchmesser (120) und einen hinteren Kanal mit größerem Durchmesser (25) umfasst, wobei zwischen dem mittigen Kanal (20) und dem vorderen Kanal (120) ein Bund (23) und eine Dichtung (8) angeordnet sind, um den vorderen Teil des Gleitstücks (6) zu führen und abzudichten, wobei eine zweite Dichtung (80) um den Flansch (61) des Gleitstücks herum angeordnet ist, um die Bewegung des Flansches (61) des Gleitstücks im Inneren des hinteren Kanals (25) des Korpus' (2) zu führen und abzudichten.

10. Vorrichtung (1) nach einem der vorangehenden Ansprüche, **dadurch gekennzeichnet, dass** sie eine Feder (9) des Gleitstücks umfasst, die um das Gleitstück (6) in dem mittigen Kanal (20) des Korpus' herum angeordnet ist, wobei ein Ende der Feder an dem Bund (23) des Korpus' anliegt und das andere Ende der Feder an dem Flansch (61) des Gleitstücks anliegt.

11. Vorrichtung (1) nach einem der Ansprüche 5 bis 10, **dadurch gekennzeichnet, dass** sie eine Feder (90) des Verschlussstücks umfasst, die im Inneren des Gleitstücks (6) angeordnet ist und ein Ende aufweist, das an einem vorderen Bund (66) des Gleitstücks anliegt, wobei das andere Ende an dem vorderen Stempel (52) des Verschlussstück anliegt.

12. Vorrichtung (1) nach einem der vorangehenden Ansprüche, **dadurch gekennzeichnet, dass** es eine Feder (91) des Freigabeschaftes umfasst, die im Inneren der radialen Verbindung (26) des Korpus' um den Freigabeschaft (7) herum angeordnet ist, wobei ein Ende der Feder an einem Flansch (71) des Freigabeschaftes anliegt und das andere Ende der Feder an einer Unterlegscheibe (200) anliegt, die in der radialen Verbindung (26) mittels Vernieten des Endrandes der Verbindung arretiert ist.

13. Vorrichtung (1) nach einem der vorangehenden Ansprüche, **dadurch gekennzeichnet, dass** sie einen Filter (100) umfasst, der in der Muffe (3) um das Betätigungsmittel (43) herum angeordnet ist, um Wasserstein und Verunreinigungen herauszufiltern.

14. Vorrichtung (1) nach einem der vorangehenden Ansprüche, **dadurch gekennzeichnet, dass** die Elemente, die für einen Kontakt mit dem Wasser vorgesehen sind, vollständig oder teilweise mittels eines Chrom- und/oder Teflon- und/oder Nickelbeschichtungsprozesses und/oder anderen Oberflächenbehandlungen behandelt sind, die dafür geeignet sind, die Verschleißfestigkeit zu erhöhen und/oder die Reibung zwischen den Teilen, die sich relativ zueinander bewegen, zu verringern und/oder den Prozess der Ablagerung von Wasserstein zu verlangsamen oder zu verringern.

## Revendications

1. Dispositif thermostatique (1) comprenant :
- un corps de conteneur (2) conçu afin d'être raccordé à une entrée de délivrance d'eau chaude,
- un manchon (3) couplé audit corps (2) et approprié afin d'être raccordé à un tuyau d'alimentation en eau chaude,
- un coulisseau (6) circulant à l'intérieur dudit corps (2) et pourvu d'un canal (60) pour le passage de l'eau,
- un moyen (7) agissant sur ledit coulisseau (6) qui peut être actionné par l'utilisateur,
- un obturateur (5) circulant à l'intérieur dudit coulisseau (6) pour commuter d'une position de fermeture dans laquelle il ferme l'écoulement depuis le manchon (3) vers le canal (60) dudit coulisseau, à une position d'ouverture dans laquelle il permet l'écoulement depuis le manchon (3) vers le canal (60) dudit coulisseau,
- un moyen sensible à la température (42) approprié pour détecter la température de l'eau, et
- un moyen actionneur (43, 44) couplé audit obturateur (5) et raccordé opérationnellement audit moyen sensible à la température (42) afin de régler ledit obturateur sur sa position fermée, quand ledit moyen sensible à la température (42) a détecté une température supérieure à une valeur seuil prédéterminée,
**caractérisé en ce que**
- ledit moyen (7) est un moyen de détente approprié afin de verrouiller et détendre le coulisseau (6),
- ledit moyen sensible à la température (42) est approprié afin de détecter la température de l'eau à l'intérieur du manchon (3),
- ledit coulisseau (6) comprend une bride d'un diamètre plus grand (61) appropriée afin d'être verrouillée par ledit moyen de détente (7) qui comprend un axe coulissant dans un canal radial (26) dudit corps (2).

2. Dispositif (1) selon la revendication 1, **caractérisé en ce que** ledit moyen sensible à la température (42) comprend des matériaux thermo-expansibles, comme des mélanges de cires paraffines.

3. Dispositif (1) selon la revendication 1 ou 2, **caractérisé en ce que** ledit moyen actionneur comprend un piston (44) qui fonctionne dans un siège (59) dudit obturateur (5).

4. Dispositif (1) selon la revendication 3, **caractérisé en ce que** ledit manchon (3) comprend des ponts radiaux (32) qui supportent un écrou à oeil fileté intérieurement (33) pour renfermer un filetage externe (40) dudit moyen actionneur (43), de sorte que le piston (44) du moyen actionneur fonctionne axialement par rapport au dispositif (1).

5. Dispositif (1) selon une quelconque des revendications précédentes, **caractérisé en ce que** ledit obturateur (5) comprend une tige (50) qui supporte à ses extrémités un piston plongeur avant (52) et une piston plongeur arrière (53) pourvus de joints d'étanchéité (81, 82) pour guider le piston plongeur avant (52) et pour interrompre l'écoulement d'eau à l'intérieur du canal (60) du coulisseau respectivement.

6. Dispositif (1) selon la revendication 5, **caractérisé en ce que** ladite tige (50) de l'obturateur comporte une fente (51) communicant avec un canal axial (56) à l'intérieur dudit piston plongeur avant (52) qui communique avec le canal (60) du coulisseau.

7. Dispositif (1) selon une quelconque des revendications précédentes, **caractérisé en ce que** à l'extrémité de ladite bride (61) du coulisseau, des ponts (63) sont prévus qui supportent une tête (64) de manière à définir des fentes (65) pour le passage de l'eau depuis ledit raccordement vers ledit canal (60) du coulisseau.

8. Dispositif (1) selon la revendication 7, **caractérisé en ce que** à l'extrémité arrière du piston plongeur arrière (52) de l'obturateur, une bride (57) est prévue qui, conjointement à une jante de guidage positionnée à l'extrémité avant du piston plongeur avant (52), aide à guider l'obturateur (5) dans son mouvement à l'intérieur du canal (60) du coulisseau (6), en empêchant un coincement dû au désalignement entre l'axe de l'obturateur (5) et l'axe du canal (60) du coulisseau (6).

9. Dispositif (1) selon une quelconque des revendications précédentes, **caractérisé en ce que** ledit corps (2) comprend un canal axial comprenant un canal central (20), un canal avant avec un plus petit diamètre (120) et un canal arrière avec un diamètre plus grand (25), dans lequel entre le canal central (20) et le canal avant (120) un collier (23) est prévu et un joint d'étanchéité (8) pour guider et sceller de manière étanche a partie avant du coulisseau (6), un second joint d'étanchéité (80) étant positionné autour de la bride (61) du coulisseau pour guider et sceller de manière étanche la course de la bride (61) du coulisseau à l'intérieur du canal arrière (25) du corps (2).

10. Dispositif (1) selon une quelconque des revendications précédentes, **caractérisé en ce que** il comprend un ressort (9) du coulisseau positionné autour du coulisseau (6) dans le canal central (20) du corps, dans lequel une extrémité du ressort s'arrête contre ledit collier (23) du corps et l'autre extrémité du ressort s'arrête contre ladite bride (61) du coulisseau.

11. Dispositif (1) selon une quelconque des revendications 5 à 10, **caractérisé en ce que** il comprend un ressort (90) de l'obturateur positionné à l'intérieur dudit coulisseau (6) et ayant une extrémité butant sur un premier collier (66) du coulisseau et l'autre extrémité butant sur le piston plongeur avant (52) de l'obturateur.

12. Dispositif (1) selon une quelconque des revendications précédentes, **caractérisé en ce que** il comprend un ressort (91) de l'arbre de détente positionné à l'intérieur dudit raccordement radial (26) du cops autour de l'arbre de détecte (7), dans lequel une extrémité du ressort bute sur une bride (71) de l'arbre de détente et l'autre extrémité du ressort bute sur une rondelle (200) verrouillé dans ledit raccordement radial (26) par rivetage du bord d'extrémité de raccordement.

13. Dispositif (1) selon une quelconque des revendications précédentes, **caractérisé en ce que** il comprend un filtre (100) positionné dans ledit manchon (3) autour dudit moyen actionneur (43) pour filtrer le calcaire et les impuretés.

14. Dispositif (1) selon une quelconque des revendications précédentes, **caractérisé en ce que** les éléments conçus pour venir en contact avec l'eau sont traités totalement ou partiellement au moyen d'un processus de revêtement avec du chrome et/ou du Teflon et/ou du nickel et/ou d'autres traitements de surface appropriés pour augmenter la résistance à l'usure et/ou réduire la friction entre les pièces en mouvement relatif et/ou .ralentir/réduire le processus de dépôt de calcaire.
